# EUROPEAN PATENT SPECIFICATION

(11) **EP 3 944 406 B1**
(45) Date of publication and mention of the grant of the patent: **10.07.2024**
(21) Application number: 20888728.1
(22) Date of filing: 17.12.2020
(51) Int. Cl.: H01M 50/403, H01M 50/434, H01M 50/437, H01M 50/44, H01M 10/0562, H01M 50/431

(54) **COMPOSITE SOLID ELECTROLYTE SEPARATOR USING INORGANIC FIBERS, AND SECONDARY BATTERY USING SAME**
FESTELEKTROLYTKONDENSATOR MIT ANORGANISCHEN FASERN UND DIESE VERWENDENDE SEKUNDÄRBATTERIE
SÉPARATEUR D'ÉLECTROLYTE SOLIDE COMPOSITE UTILISANT DES FIBRES INORGANIQUES, ET BATTERIE SECONDAIRE L'UTILISANT

(30) Priority: 26.05.2020 KR 20200063303; 01.07.2020 KR 20200080798
(43) Date of publication of application: 26.01.2022
(73) Proprietor: ENERGY11 CO., LTD., Jeollabuk-do 55315 (KR)
(72) Inventor: HA, Youngkyun, Dalseong-gun Daegu 42995 (KR); CHOO, Kyochan, Seoul 07016 (KR); LIM, Duhyun, Seoul 04951 (KR)
(74) Representative: M. Zardi & Co S.A.
(86) International application number: PCT/KR2020/018562
(87) International publication number: WO 2021/241829

(56) References cited:
- EP-A1- 2 680 342
- CN-A- 110 098 432
- JP-A- 2015 026 483
- KR-A- 20000 018 387
- KR-A- 20180 032 037
- KR-A- 20180 099 548
- KR-A- 20190 079 171
- JALALIAN-KHAKSHOUR A.; PHILLIPS C. O.; JACKSON L.; DUNLOP T. O.; MARGADONNA S.; DEGANELLO D.: "Solid-state synthesis of NASICON (NaZrSiPO) using nanoparticle precursors for optimisation of ionic conductivity", JOURNAL OF MATERIAL SCIENCE, vol. 55, no. 6, 11 November 2019 (2019-11-11), Dordrecht , pages 2291 - 2302, XP036936768, ISSN: 0022-2461, DOI: 10.1007/s10853-019-04162-8

## Description

### [Technical Field]

The present disclosure relates to a composite solid electrolyte separation membrane using inorganic fiber and a secondary battery using the same, and more particularly to a composite solid electrolyte separation membrane using inorganic fiber and a secondary battery using the same for maintaining the predetermined pressure, predetermined thickness, and poise viscosity of the composite solid electrolyte to be appropriate for firing at high temperature.

### [Background Art]

Recently, with the development of electric vehicles and energy storage devices, the demand for secondary batteries has increased, and research has been actively conducted into secondary batteries having high energy density. Among secondary batteries, a sodium secondary battery uses sodium metal oxide as a positive electrode active material and uses a metal, sodium metal alloy, crystalline or amorphous carbon, or carbon composite as a negative electrode active material. The sodium secondary battery is charged and discharged while a process of intercalation and deintercalation of sodium ions from a sodium metal oxide of a positive electrode to a graphite electrode of a negative electrode is repeatedly performed.

A separation membrane is a core component of the secondary battery, and the stability of the separation membrane is very important in order to prevent fire hazard and to safely use the secondary battery. NASICON is mainly used to stably maintain the separation membrane. Although NASICON is a type of ceramic and has high ionic conductivity, NASICON may have high surface resistance and may crack, and thus a composite solid electrolyte mixed with a polymer is used. However, the composite solid electrolyte mixed with a polymer has low tensile strength and is not highly usable, and thus a support made using nonwoven fabric is coated with the composite solid electrolyte and is used, but there is a problem in that the nonwoven fabric is deformed even at low temperature. EP 2680342 A1 discloses a separator for an electric storage device which has small thermal shrinkage under high-temperature environment, and in which the increase of the battery temperature can be suppressed. JP 2015026483 A discloses a positive electrode for sodium batteries for a sodium battery, including a positive electrode, a negative electrode, and an electrolytic layer interposed between the positive and negative electrodes.

### [Disclosure]

### [Technical Problem]

Therefore, the present disclosure has been made in view of the above problems, and it is one object of the present disclosure to provide a composite solid electrolyte separation membrane using inorganic fiber and a secondary battery using the same for increasing lifespan and heat resistance and increasing utilization.

It is another object of the present disclosure to provide a composite solid electrolyte separation membrane using inorganic fiber and a secondary battery using the same for lowering resistance of an electrode through a firing roller at high temperature.

### [Technical Solution]

In accordance with one aspect of the present disclosure, provided is a composite solid electrolyte separation membrane including inorganic fiber, a sodium oxide-based ceramic material impregnated into the inorganic fiber, and an electrolyte impregnated into the inorganic fiber into which the sodium oxide-based ceramic material is impregnated, characterized in that the sodium oxide-based ceramic material is any one of NASICON (Na₃Zr₂Si₂PO₁₂), sodium polyphosphate (Na₅P₃O₁₀), and trisodium phosphate (Na₃PO₄·12H₂O).

Here, the composite solid electrolyte separation membrane may include 120 to 150 parts by weight of the sodium oxide-based ceramic material and 3 to 10 parts by weight of the electrolyte based on 100 parts by weight of the inorganic fiber.

The composite solid electrolyte separation membrane may have a thickness of 35 to 45 µm.

The inorganic fiber may use any one of glass fiber, inorganic rock powder, and thermosetting fiber.

When the sodium oxide-based ceramic material is NASICON, the NASICON may include ZrO₂ , SiO₂, and Na₃PO₄·12H₂O.

The electrolyte may use any one of a liquid electrolyte and an ion electrolyte.

The present disclosure provides a secondary battery including the aforementioned composite solid electrolyte separation membrane.

In accordance with another aspect of the present disclosure, provided is a method of manufacturing a composite solid electrolyte separation membrane, the method including impregnating a sodium oxide-based ceramic material into inorganic fiber, and
impregnating an electrolyte into the inorganic fiber into the sodium oxide-based ceramic material is impregnated, characterized in that the sodium oxide-based ceramic material is any one of NASICON (Na₃Zr₂Si₂PO₁₂), sodium polyphosphate (Na₅P₃O₁₀), and trisodium phosphate (Na₃PO₄·12H₂O).

Here, the impregnating the sodium oxide-based ceramic material into the inorganic fiber may include synthesizing ZrO₂ , SiO₂, and Na₃PO₄·12H₂O, after adding and mixing ethanol to the synthesized material, washing the synthesized material with alcohol and primarily firing the synthesized material in an electric furnace at predetermined temperature for a predetermined time, drying the primarily fired synthesized material, pulverizing the dried synthesized material in a form of powder, secondarily firing the synthesized material pulverized in the form of powder in an electric furnace at predetermined temperature for a predetermined time, stirring PVDF-HFP and NMP in the NASICON powder generated in the secondarily firing to generate NASICON slurry, impregnating the NASICON slurry into the inorganic fiber, and washing a surface of the inorganic fiber into which the NASICON slurry is impregnated and drying the inorganic fiber for a predetermined time.

### [Advantageous Effects]

According to the present disclosure, a composite solid electrolyte separation membrane may include inorganic fiber, and thus may ensure tensile strength, may increase the lifespan of a secondary battery, and may not be deformed even by heat at about 1000 °C, thereby increasing durability. Poise viscosity may be maintained to increase surface hardness and to improve heat resistance and durability. The inorganic fiber may be coated with an incombustible electrolyte and may be impregnated into Hong type, thereby ensuring stability and improving durability. In addition, electrode resistance may be reduced through a firing roller at high temperature, and long-term reliability may be increased by preventing side reactions of dendrite that occurs during charging and discharging.

### [Description of Drawings]

FIG. 1 is a diagram for explaining a method of manufacturing a composite solid electrolyte separation membrane according to an embodiment of the present disclosure.
FIG. 2 is a diagram for explaining charging and discharging of a secondary battery using a composite solid electrolyte separation membrane according to an embodiment of the present disclosure.
FIG. 3 is a diagram showing tensile strength of a composite solid electrolyte separation membrane according to an embodiment of the present disclosure.
FIG. 4 is a diagram showing ion conductivity of a composite solid electrolyte separation membrane according to an embodiment of the present disclosure.
FIG. 5 is a diagram showing a scanning electron microscope (SEM) image of a composite solid electrolyte separation membrane according to an embodiment of the present disclosure.
FIG. 6 is a diagram showing a method of manufacturing a composite solid electrolyte separation membrane using a firing roller at high temperature according to an embodiment of the present disclosure.

### [Best Mode]

Hereinafter, the present disclosure will be described in detail by explaining exemplary embodiments of the present disclosure with reference to the accompanying drawings. In the following description of the present disclosure, a detailed description of known functions and configurations incorporated herein will be omitted when it may make the subject matter of the present disclosure unclear.

As an example of a secondary battery according to the present disclosure, a sodium secondary battery will be described, and the present disclosure may also be applied to other secondary batteries in the same/similar way.

In addition, the case in which a composite solid electrolyte separation membrane includes an inorganic fiber will be exemplified, and the present disclosure may also be applied to the case in which special yarn is used.

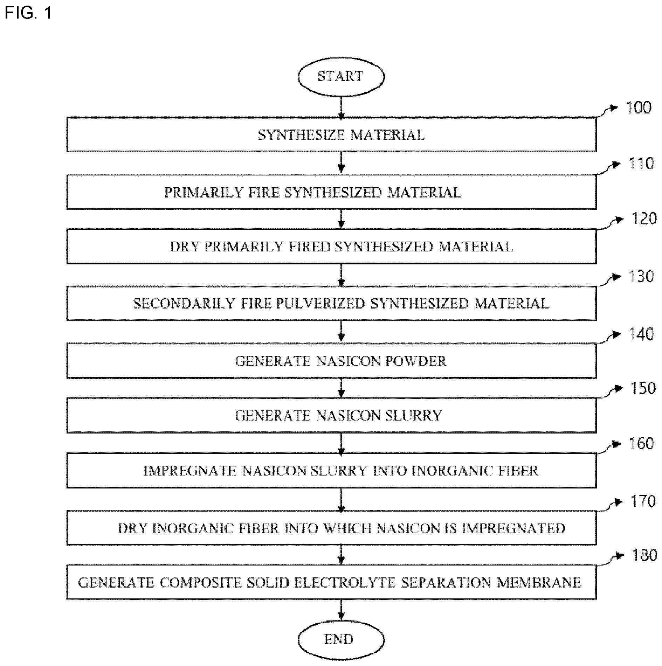

FIG. 1 is a diagram for explaining a method of manufacturing a composite solid electrolyte separation membrane according to an embodiment of the present disclosure.

The composite solid electrolyte separation membrane according to the present disclosure may include inorganic fiber, a sodium oxide-based ceramic material, and an electrolyte, and here, the sodium oxide-based ceramic material may have 120 to 150 parts by weight based on 100 parts by weight of the inorganic fiber, the electrolyte may have 3 to 10 parts by weight based on 100 parts by weight of the inorganic fiber, and the composite solid electrolyte separation membrane may have a thickness of 35 to 45 µm in order to increase ion conductivity.

The inorganic fiber may be filmed in the polymer electrolyte using an impregnation coating method. For example, glass fiber, inorganic rock powder, thermosetting fiber, or the like may be used for the inorganic fiber. In the case of the glass fiber, the glass fiber may have a pore structure of a membrane, which contributes to a high electrolyte impregnation rate, may have a high strength of 9 to 15 g/d, may have low friction resistance, and is an incombustible material, which is advantageously stable with respect to acids and organic solvents. In addition, the sodium oxide-based ceramic material uses NASICON (Na₃Zr₂Si₂PO₁₂), sodium polyphosphate (Na₅P₃O₁₀), and trisodium phosphate (Na₃PO₄·12H₂O), and may be used using impregnated coating with the inorganic fiber.

The electrolyte may use a liquid electrolyte or an ion electrolyte and may use molecules obtained by dissolving 1 M of sodium hexafluorophosphate (NaPF₆) or sodium perchlorate (NaClO₄) salt and additives, e.g., ethylene carbonate (EC) or diethyl carbonate (DEC).

With reference to FIG. 1, the method of manufacturing the composite solid electrolyte separation membrane according to the present disclosure will be described, and the composite solid electrolyte separation membrane according to the present disclosure may be manufactured using the method including preparing a sodium oxide-based ceramic material, impregnating the sodium oxide-based ceramic material and the inorganic fiber, and impregnating the electrolyte, and may use the Hong type.

The preparing the sodium oxide-based ceramic material may include preparing the sodium oxide-based ceramic material in the form of powder and then preparing the sodium oxide-based ceramic material in the form of slurry. For example, with regard to a preparation process of NASICON, Zirconium dioxide (ZrO₂), silicon dioxide (SiO₂), and trisodium phosphate (Na₃PO₄·12H₂O) may be synthesized at a predetermined ratio (100). In this case, ZrO₂, SiO₂, and Na₃PO₄·12H₂O may be composed at a composition ratio of 1: 0.52: 1.7.

After the material is synthesized, a weighing process may be performed on the synthesized material and a primary firing process may be performed (110). In the primary firing process 110, ethanol may be added to the synthesized material, may be mixed in a MILL mixer using a ZrO₂ ball, may be washed with alcohol using a sieve, and may then be fired in an electric furnace at 400 °C for 9 hours. After the primary firing, the synthesized material may be washed using the sieve and may then be vacuum-dried for 2 hours (120).

After drying, the synthesized material may be evenly pulverized in the form of powder, and the pulverized synthesized material may be secondarily fired in an electric furnace at 1,200°C for 12 hours (130) to form NASICON powder (140). Then, the NASICON powder, polyvinylidene fluoride (PVDF)-Hexafluoropropene (HFP), and N-methyl-2-pyrrolidone (NMP) may be stirred at a predetermined ratio to form NASICON slurry (150) and may be impregnated into inorganic fiber (160). In this case, the NASICON slurry may include the NASICON powder, the PVDF-HFP, and the NMP in a composition ratio of 0.75: 0.25: 1.

When the impregnation process is completed, a surface of the inorganic fiber into which NASICON is impregnated may be washed with deionized (DI) water, may be dried at room temperature for about 20 minutes, and may then be dried in an oven at 80 °C for 24 hours (170). After drying, an electrolyte may be impregnated into the inorganic fiber in which NASICON is impregnated to form the composite solid electrolyte separation membrane (180).

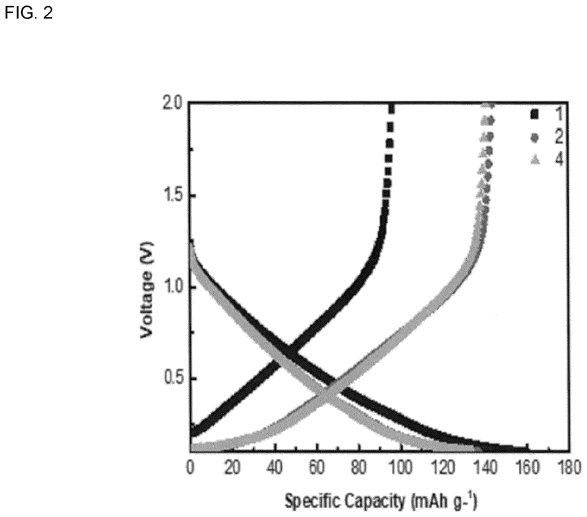

FIG. 2 is a diagram for explaining charging and discharging of a secondary battery using a composite solid electrolyte separation membrane according to an embodiment of the present disclosure.

Hereinafter, a result obtained via an experiment with respect to a composite solid electrolyte separation membrane manufactured by the Hong type using 7 g of glass fiber as an inorganic fiber, 12 g ofNASICON as a sodium oxide-based ceramic material, and 1 g of ion electrolyte as an electrolyte will be described. In addition, NASICON may be manufactured by performing the firing process, the drying process, the impregnation process, and the like using ZrO₂, SiO₂, and Na₃PO₄·12H₂O, as described above.

FIG. 2 shows charging and discharging of a half cell using a hard carbon electrode, and a composite solid electrolyte separation membrane including sodium metal and inorganic fiber in a secondary battery using the composite solid electrolyte separation membrane according to the present disclosure. In four cycles according to an embodiment using electrolyte of NaPF₆, an initial capacitance may be 160 mAh/g, and a second cycle capacitance may be 143 mAh/g.

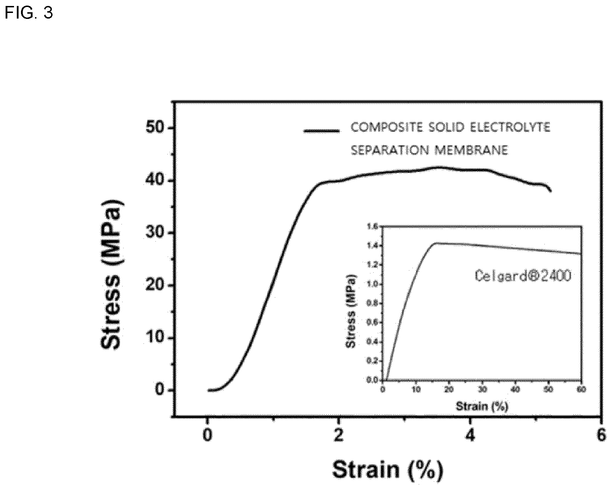

FIG. 3 is a diagram showing tensile strength of a composite solid electrolyte separation membrane according to an embodiment of the present disclosure.

A plot in a small box of FIG. 3 shows tensile strength of commercially available Celgard^{®}2400, and as seen from FIG. 3, the composite solid electrolyte separation membrane according to the present disclosure has tensile strength that is about 30 times higher than Celgard^{®}2400.

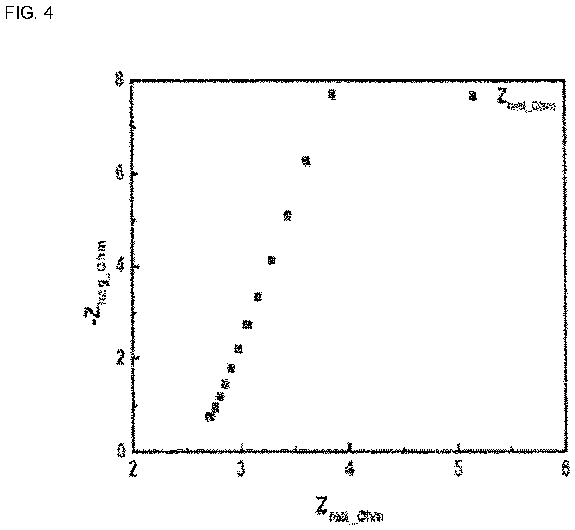

FIG. 4 is a diagram showing ion conductivity of a composite solid electrolyte separation membrane according to an embodiment of the present disclosure.

Referring to FIG. 4, the ion conductivity of the composite solid electrolyte separation membrane according to the present disclosure may have σ=5.97×10⁻³ S/cm at a thickness of 40 µm in the case of sinking mill and may have σ=7.94×10⁻³ S/cm in the case of high ball mill.

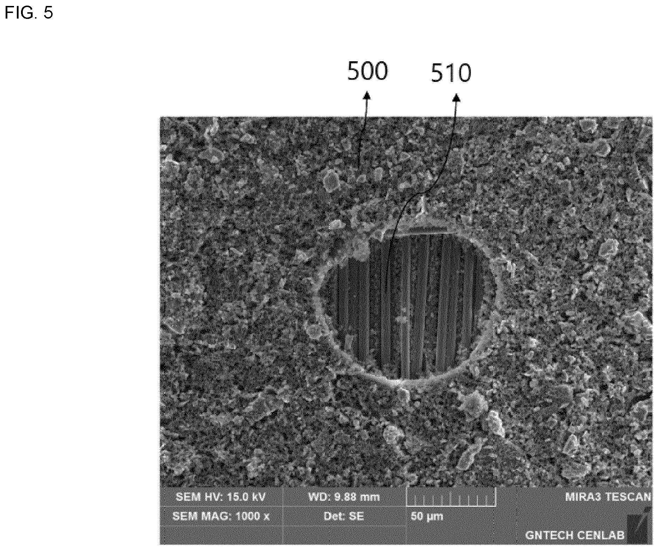

FIG. 5 is a diagram showing a scanning electron microscope (SEM) image of a composite solid electrolyte separation membrane according to an embodiment of the present disclosure.

FIG. 5 shows a composite type separation membrane between a NASICON 500 and an inorganic fiber 510 during measurement using an SEM. As seen from FIG. 5, the inorganic fiber 510 may be shaped like a central pillar at the center and the NASICON 500 may be formed at upper and lower layers therearound.

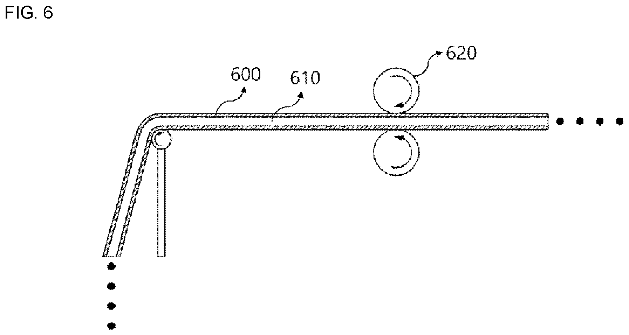

FIG. 6 is a diagram showing a method of manufacturing a composite solid electrolyte separation membrane 600 using a firing roller 620 at high temperature according to an embodiment of the present disclosure.

Referring to FIG. 6, the composite solid electrolyte separation membrane 600 according to the present disclosure may include an inorganic fiber 610 and may be processed using the firing roller 620 at high temperature. In this case, the firing roller 620 may be maintained at temperature of 900 to 1100 °C.

When the composite solid electrolyte separation membrane 600 passes through the firing roller 620, pressure of the firing roller 620 may be applied to the composite solid electrolyte separation membrane 600, and accordingly, it may be possible to adjust the thickness of the separation membrane 600, cohesion may increase, and ceramic such as NASICON included in the separation membrane 600 may be sintered and fired.

Although specific embodiments have been described in the detailed description of the present disclosure, various modifications are possible without departing from the scope of the present disclosure.

Therefore, the scope of the present disclosure is not limited to the described embodiments, and should be determined not only by the scope of the claims to be described below, but also by the scope and equivalents of the claims.

## Claims

1. A composite solid electrolyte separation membrane comprising:
inorganic fiber;
a sodium oxide-based ceramic material impregnated into the inorganic fiber; and
an electrolyte impregnated into the inorganic fiber into which the sodium oxide-based ceramic material is impregnated,
**characterized in that** the sodium oxide-based ceramic material is any one of NASICON (Na₃Zr₂Si₂PO₁₂), sodium polyphosphate (Na₅P₃O₁₀), and trisodium phosphate (Na₃PO₄·12H₂O).

2. The composite solid electrolyte separation membrane of claim 1, wherein the composite solid electrolyte separation membrane includes 120 to 150 parts by weight of the sodium oxide-based ceramic material and 3 to 10 parts by weight of the electrolyte based on 100 parts by weight of the inorganic fiber.

3. The composite solid electrolyte separation membrane of claim 1, wherein the composite solid electrolyte separation membrane has a thickness of 35 to 45 µm.

4. The composite solid electrolyte separation membrane of claim 1, wherein the inorganic fiber is any one of glass fiber, and thermosetting fiber.

5. The composite solid electrolyte separation membrane of claim 1, wherein, when the sodium oxide-based ceramic material is NASICON, the NASICON includes ZrO₂, SiO₂, and Na₃PO₄·12H₂O.

6. The composite solid electrolyte separation membrane of claim 1, wherein the electrolyte is any one of a liquid electrolyte and an ion electrolyte.

7. A secondary battery including the composite solid electrolyte separation membrane of any one of claims 1 to 6.

8. A method of manufacturing a composite solid electrolyte separation membrane, the method comprising:
impregnating a sodium oxide-based ceramic material into inorganic fiber; and
impregnating an electrolyte into the inorganic fiber into which the sodium oxide-based ceramic material is impregnated,
**characterized in that** the sodium oxide-based ceramic material is any one of NASICON (Na₃Zr₂Si₂PO₁₂), sodium polyphosphate (Na₅P₃O₁₀), and trisodium phosphate (Na₃PO₄·12H₂O).

9. The method of claim 8, wherein the impregnating the sodium oxide-based ceramic material into the inorganic fiber includes:
synthesizing ZrO₂, SiO₂, and Na₃PO₄·12H₂O;
after adding and mixing ethanol to the synthesized material, washing the synthesized material with alcohol and primarily firing the synthesized material in an electric furnace at predetermined temperature for a predetermined time;
drying the primarily fired synthesized material;
pulverizing the dried synthesized material in a form of powder;
secondarily firing the synthesized material pulverized in the form of powder in an electric furnace at predetermined temperature for a predetermined time;
stirring PVDF-HFP and NMP in the NASICON powder generated in the secondarily firing to generate NASICON slurry;
impregnating the NASICON slurry into the inorganic fiber; and
washing a surface of the inorganic fiber into which the NASICON slurry is impregnated and drying the inorganic fiber for a predetermined time.

## Patentansprüche

1. Kompositfestelektrolyt-Trennmembran, umfassend:
eine anorganische Faser;
ein keramisches Material auf Natriumoxidbasis, das in die anorganische Faser imprägniert ist; und
einen Elektrolyten, der in die anorganische Faser imprägniert ist, in die das keramische Material auf Natriumoxidbasis imprägniert ist,
**dadurch gekennzeichnet, dass** das keramische Material auf Natriumoxidbasis eines von NASICON (Na₃Zr₂Si₂PO₁₂), Natriumpolyphosphat (Na₅P₃O₁₀) und Trinatriumphosphat (Na₃PO₄·12H₂O) ist.

2. Kompositfestelektrolyt-Trennmembran nach Anspruch 1, wobei die Kompositfestelektrolyt-Trennmembran 120 bis 150 Gew.-Teile des keramischen Materials auf Natriumoxidbasis und 3 bis 10 Gew.-Teile des Elektrolyten, basierend auf 100 Gew.-Teilen der anorganischen Faser, enthält.

3. Kompositfestelektrolyt-Trennmembran nach Anspruch 1, wobei die Kompositfestelektrolyt-Trennmembran eine Dicke von 35 bis 45 µm hat.

4. Kompositfestelektrolyt-Trennmembran nach Anspruch 1, wobei die anorganische Faser eine von Glasfaser und duroplastischer Faser ist.

5. Kompositfestelektrolyt-Trennmembran nach Anspruch 1, wobei, wenn das keramische Material auf Natriumoxidbasis NASICON ist, das NASICON ZrO₂, SiO₂ und Na₃PO₄·12H₂O enthält.

6. Kompositfestelektrolyt-Trennmembran nach Anspruch 1, wobei der Elektrolyt einer von einem flüssigen Elektrolyt und einem lonenelektrolyt ist.

7. Sekundärbatterie umfassend die Kompositfestelektrolyt-Trennmembran nach einem der Ansprüche 1 bis 6.

8. Verfahren zum Herstellen einer Kompositfestelektrolyt-Trennmembran, wobei das Verfahren umfasst:
Imprägnieren eines keramischen Materials auf Natriumoxidbasis in eine anorganische Faser; und
Imprägnieren eines Elektrolyten in die anorganische Faser, in die das keramische Material auf Natriumoxidbasis imprägniert ist,
**dadurch gekennzeichnet, dass** das keramische Material auf Natriumoxidbasis eines von NASICON (Na₃Zr₂Si₂PO₁₂), Natriumpolyphosphat (Na₅P₃O₁₀) und Trinatriumphosphat (Na₃PO₄·12H₂O) ist.

9. Verfahren nach Anspruch 8, wobei das Imprägnieren des keramischen Materials auf Natriumoxidbasis in die anorganische Faser umfasst:
Synthetisieren von ZrO₂, SiO₂ und Na₃PO₄·12H₂O;
nach Zugeben und Mischen von Ethanol zu dem synthetisierten Material, Waschen des synthetisierten Materials mit Alkohol und primäres Brennen des synthetisierten Materials in einem Elektroofen bei vorbestimmter Temperatur für eine vorbestimmte Zeit;
Trocknen des primär gebrannten synthetisierten Materials;
Pulverisieren des getrockneten synthetisierten Materials in eine Pulverform;
sekundäres Brennen des in Pulverform pulverisierten synthetisierten Materials in einem Elektroofen bei vorbestimmter Temperatur für eine vorbestimmte Zeit;
Einrühren von PVDF-HFP und NMP in das beim zweiten Brennen erzeugte NASICON-Pulver, um eine NASICON-Aufschlämmung zu erzeugen;
Imprägnieren der NASICON-Aufschlämmung in die anorganische Faser; und
Waschen der Oberfläche der anorganischen Faser, in die die NASICON-Aufschlämmung imprägniert ist, und Trocknen der anorganischen Faser für eine vorbestimmte Zeit.

## Revendications

1. Membrane de séparation d'électrolyte solide composite comprenant :
une fibre inorganique ;
un matériau céramique à base d'oxyde de sodium imprégné dans la fibre inorganique ; et
un électrolyte imprégné dans la fibre inorganique dans laquelle est imprégné le matériau céramique à base d'oxyde de sodium,
**caractérisée en ce que** le matériau céramique à base d'oxyde de sodium est l'un quelconque parmi NASICON (Na₃Zr₂Si₂PO₁₂), polyphosphate de sodium (Na₅P₃O₁₀) et phosphate trisodique (Na₃PO₄·12H₂O).

2. Membrane de séparation d'électrolyte solide composite selon la revendication 1, dans laquelle la membrane de séparation d'électrolyte solide composite comporte 120 à 150 parties en poids du matériau céramique à base d'oxyde de sodium et 3 à 10 parties en poids de l'électrolyte sur la base de 100 parties en poids de la fibre inorganique.

3. Membrane de séparation d'électrolyte solide composite selon la revendication 1, dans laquelle la membrane de séparation d'électrolyte solide composite a une épaisseur de 35 à 45 µm.

4. Membrane de séparation d'électrolyte solide composite selon la revendication 1, dans laquelle la fibre inorganique est l'une quelconque parmi une fibre de verre et une fibre thermodurcissable.

5. Membrane de séparation d'électrolyte solide composite selon la revendication 1, dans laquelle, lorsque le matériau céramique à base d'oxyde de sodium est NASICON, NASICON comporte ZrO₂, SiO₂ et Na₃PO₄·12H₂O.

6. Membrane de séparation d'électrolyte solide composite selon la revendication 1, dans laquelle l'électrolyte est l'un quelconque parmi un électrolyte liquide et un ion.

7. Batterie secondaire comportant la membrane de séparation d'électrolyte solide composite selon l'une quelconque des revendications 1 à 6.

8. Procédé de fabrication d'une membrane de séparation d'électrolyte solide composite, le procédé comprenant :
l'imprégnation d'un matériau céramique à base d'oxyde de sodium dans une fibre inorganique ; et
l'imprégnation d'un électrolyte dans la fibre inorganique dans laquelle est imprégné le matériau céramique à base d'oxyde de sodium,
**caractérisé en ce que** le matériau céramique à base d'oxyde de sodium est l'un quelconque parmi NASICON (Na₃Zr₂Si₂PO₁₂), polyphosphate de sodium (Na₃P₃O₁₀) et phosphate trisodique (Na₃PO₄·12H₂O).

9. Procédé selon la revendication 8, dans lequel l'imprégnation du matériau céramique à base d'oxyde de sodium dans la fibre inorganique comporte :
la synthèse de ZrO₂, SiO₂ et Na₃PO₄·12H₂O;
après ajout et mélange d'éthanol au matériau synthétisé, le lavage du matériau synthétisé avec de l'alcool et la cuisson primaire du matériau synthétisé dans un four électrique à une température prédéterminée pendant une durée prédéterminée ;
le séchage du matériau synthétisé ayant subi la cuisson primaire ;
la pulvérisation du matériau synthétisé séché sous une forme de poudre ;
la cuisson secondaire du matériau synthétisé pulvérisé sous la forme de poudre dans un four électrique à une température prédéterminée pendant une durée prédéterminée ;
l'agitation de PVDF-HFP et NMP dans la poudre de NASICON générée lors de la cuisson secondaire pour générer une suspension de NASICON ;
l'imprégnation de la suspension de NASICON dans la fibre inorganique ; et
le lavage d'une surface de la fibre inorganique dans laquelle est imprégnée la suspension de NASICON et le séchage de la fibre inorganique pendant une durée prédéterminée.
